# EUROPÄISCHE PATENTSCHRIFT

(11) **EP 3 630 875 B1**
(45) Veröffentlichungstag und Bekanntmachung des Hinweises auf die Patenterteilung: **23.06.2021**
(21) Anmeldenummer: 18724279.7
(22) Anmeldetag: 22.05.2018
(51) Int. Cl.: C08J 7/04

(54) **FOLIEN MIT EINER KRATZFESTBESCHICHTUNG ALS DECKSCHICHT UND SCHICHTVERBUNDE UMFASSEND SOLCHE FOLIEN**
FILMS HAVING A SCRATCH-RESISTANT COATING AS A COVER LAYER AND LAYERED COMPOSITES COMPRISING SUCH FILMS
FEUILLES AVEC UN REVÊTEMENT RÉSISTANT AUX RAYURES EN TANT QUE COUCHE SUPÉRIEURE ET COMPOSITE STRATIFIÉ COMPRENANT DE TELLES FEUILLES

(30) Priorität: 22.05.2017 EP 17172150; 26.05.2017 LU 100262
(43) Veröffentlichungstag der Anmeldung: 08.04.2020
(73) Patentinhaber: Covestro Deutschland AG, 51373 Leverkusen (DE)
(72) Erfinder: PETZOLDT, Joachim, 40789 Monheim (DE); TZIOVARAS, Georgios, 41464 Neuss (DE); LAUTWEIN, Kay, 51061 Köln (DE); KÖHLER, Christoph, 47269 Duisburg (DE)
(74) Vertreter: Levpat
(86) Internationale Anmeldenummer: PCT/EP2018/063318
(87) Internationale Veröffentlichungsnummer: WO 2018/215420

(56) Entgegenhaltungen:
- EP-A1- 2 460 668
- EP-A2- 1 103 572
- WO-A1-2012/019583
- WO-A1-2014/029686
- WO-A1-2014/029717

## Beschreibung

Die Erfindung betrifft thermoplastische Kunststoff-Folien mit einer Kratzfestbeschichtung als Deckschicht, ein Verfahren zu deren Herstellung, Sicherheits- und/oder Wertdokumente enthaltend wenigstens eine thermoplastische Kunststoff-Folie mit Kratzfestbeschichtung als Deckschicht auf wenigstens einer Außenseite sowie ein Verfahren zu deren Herstellung sowie die Verwendung einer Lackzusammensetzung für die Herstellung von beschichteten Kunststoff-Folien.

Sicherheits- und/oder Wertdokumente, insbesondere Identifikationsdokumente, wie z.B. personalisierte ID-Karten, werden im Allgemeinen hergestellt, indem mehrere unterschiedliche Schichten, die in der Karte verschiedene Funktionen übernehmen, meist in Form von einzelnen Folien zu einer Karte laminiert werden. Hierbei werden oft während des Laminiervorgangs zusätzlich Strukturen mit Abmessungen im µm-Bereich als Sicherheitsmerkmale in die äußere Oberfläche eingeprägt.

Die für solche Dokumente bevorzugt eingesetzten thermoplastischen Materialien haben aber in der Regel relativ weiche, kratzempfindliche Oberflächen. Dadurch leidet während der Lebensdauer eines solchen Dokuments von bis zu zehn Jahren die Lesbarkeit. Darüber hinaus können Sicherheitsmerkmale zerstört werden.

Eine weitere typische Anforderung an personalisierte ID-Karten ist die Biegbarkeit und Bruchfestigkeit. Trotz häufig wiederholter Biegebelastung soll die Karte selbst, aber auch eingebaute Bauteile, wie elektronische Chips oder RFID-Antennen, in ihrer Funktion nicht beeinträchtigt werden.

Speziell Kartenlesegeräte führen oft zu Kratzern auf der Kartenoberfläche, welche die Biegbarkeit und Bruchfestigkeit der Karte reduzieren und damit die Lebensdauer der Karte verkürzen.

Um die Funktionalität der Karten über die Lebensdauer mechanisch wie auch hinsichtlich der Lesbarkeit zu gewährleisten, versuchen viele Hersteller von personalisierten ID-Karten die Außenseiten der Karten mit einer kratzfesten Schutzschicht zu versehen, die zudem eine gute Chemikalienbeständigkeit aufweisen sollte.

Klassische Kratzfestlacke auf Basis von Acrylaten, wie sie für Elektronikgehäuse und Linsen/Displays verwendet werden, haben durch ihre hohe Vernetzungsdichte herausragende Kratzfestigkeiten und Chemikalienbeständigkeiten. Der Nachteil solcher Systeme liegt aber in einer mit der Vernetzungsdichte einher gehenden Versprödung. Diese bewirkt, dass die Karte durch Kerbung (Brechen der Beschichtung) in ihrer Bruchfestigkeit insgesamt beeinträchtigt wird.

Ein weiterer Nachteil ist, dass die Prägbarkeit solcher hochvernetzten Polymere reduziert ist. Das hochvernetzte Polymer lässt sich nicht mehr ausreichend verformen, um relativ feine Strukturen des Masters in ausreichender Abbildungsschärfe zu übernehmen.

EP-A 2460668 offenbart Sicherheits- und/oder Wertdokumente enthaltend eine Kratzfestbeschichtung auf wenigstens eine Außenseite sowie entsprechend beschichtete thermoplastische Kunststoff-Folien. Die Kratzfestbeschichtung umfasst eine strahlenhärtbare Lackzusammensetzung, die zwar eine ausreichende Kratzfestigkeit aufweist, jedoch Nachteile bei der Prägbarkeit und bei der Flexibilität bei starker Beanspruchung im Gebrauch aufweist.

WO-A 2012/019583 offenbart ein Verfahren zur Beschichtung einer Folie mit einem Dual-Cure-Lack, die nach diesem Verfahren erhältlichen Folien sowie Sicherheits- und/oder Wertdokumente enthalten solche Folien. Die in WO-A 2012/019583 offenbarten Dual-Cure-Beschichtungszusammensetzungen erfüllen zwar das Kriterium der ausreichenden Kratzfestigkeit, weisen jedoch deutliche Nachteile bei der Beständigkeit gegenüber diversen Chemikalien auf.

Es bestand demnach weiterhin Bedarf Folien insbesondere für Sicherheits- und/oder Wertdokumente, ganz besonders Identifikationsdokumente, wie z.B. ID-Karten, bereitzustellen, die eine hervorragende Kratzfestigkeit aufweisen, die den relativ hohen Laminationstemperaturen bei der Herstellung der Dokumente stand hält, eine Prägung mit Strukturen im Mikrometer-Maßstab ermöglicht und den Anforderungen an die Biege- und Bruchfestigkeit solcher Dokumente auch bei starker Beanspruchung im Gebrauch genügt, ohne dabei signifikant an Kratzfestigkeit oder Chemikalienbeständigkeit einzubüßen.

Die Aufgabe, die der vorliegenden Erfindung zugrunde lag, bestand demnach darin, eine Folie, die eine solche Kratzfestbeschichtung aufweist und den vorstehenden Anforderungen genügt, sowie ein damit entsprechend ausgerüstetes Sicherheits- und/oder Wertdokument bereit zu stellen, ein Verfahren zur Herstellung einer solchen Folie und auch ein Verfahren zur Herstellung solcher Sicherheits- und/oder Wertdokumentes aufzufinden.

Diese Aufgabe wurde überraschend durch eine Folie gelöst, die ein thermoplastisches Polymer und eine Beschichtung umfasst, wobei die Beschichtung erhältlich ist aus einer Lackzusammensetzung enthaltend ein Urethan(meth)acrylats umfassend Isocyanatgruppen und (Meth)acryloylgruppen und ein acrylierten Acrylats.

Gegenstand der vorliegenden Erfindung ist daher eine Folie umfassend eine thermoplastische Kunststofffolie und eine Beschichtung, wobei die Beschichtung hergestellt wurde aus einer Lackzusammensetzung enthaltend
a) Urethan(meth)acrylat, welches (Meth)acryloylgruppen und eine Isocyanat-Funktionalität von ≥ 1,75 bis ≤ 2,3, vorzugsweise von ≥ 1,85 bis ≤ 2,2, ganz besonders bevorzugt von ≥ 1,9 bis ≤ 2,1 aufweist,
b) acryliertes Acrylat, welches noch freie isocyanatreaktive Gruppen aufweist,
c) optional Additive und/oder Lösungsmittel
"(Meth)acrylat" und (Meth)acryloyl" bezieht sich im Rahmen dieser Erfindung auf entsprechende Acrylat- oder Methacrylatfunktionen oder auf eine Mischung beider.

Die Bestimmung der NCO-Gehalte der Urethan(meth)acrylate erfolgte titrimetrisch nach DIN EN ISO 11909:2007-05. Die mittleren Molekulargewichte wurden durch Gelpermeationschromatographie nach DIN 55672-1:2016-03 unter Verwendung von Polystyrol als Standard bestimmt. Aus diesen Werten lässt sich die Isocyanat-Funktionalität berechnen, wobei es sich hierbei um einen mittleren Wert handelt.

Bei der thermoplastischen Kunststofffolie handelt es sich vorzugsweise um Polymerisate von ethylenisch ungesättigten Monomeren und/oder Polykondensaten von bifunktionellen reaktiven Verbindungen und/oder Polyadditionsprodukten von bifunktionellen reaktiven Verbindungen. Für bestimmte Anwendungen, wie beispielsweise im Bereich der Identifikationsdokumente, kann es vorteilhaft und demnach bevorzugt sein, einen transparenten thermoplastischen Kunststoff einzusetzen. Bei einer solchen thermoplastischen Kunststofffolie kann es sich um eine ein- oder mehrschichtige thermoplastische Kunststofffolie handeln, vorzugsweise um eine einschichtige thermoplastische Kunststofffolie. Im Falle einer mehrschichtigen thermoplastischen Kunststofffolie als Substrat kann diese eine mittels Co-Extrusion, Extrusionslamination oder Lamination, vorzugsweise eine mittels Co-Extrusion, hergestellte thermoplastische Kunststoff-Folie sein.

Besonders geeignete thermoplastische Kunststoffe sind ein oder mehrere Polycarbonat(e) oder Copolycarbonat(e) auf Basis von Diphenolen, Poly- oder Copoly(meth)acrylat(e) wie beispielhaft und vorzugsweise Polymethylmethacrylat bzw. Poly(meth)acrylat (PMMA), Poly- oder Copolymer(e) mit Styrol wie beispielhaft und vorzugsweise Polystyrol (PS), Acrylnitril-Butadien-Styrol (ABS), oder Polystyrolacrylnitril (SAN), thermoplastische Polyurethan(e), sowie Polyolefin(e), wie beispielhaft und vorzugsweise Polypropylentypen oder Polyolefine auf der Basis von cyclischen Olefinen (z.B. TOPAS®, Hoechst), Poly- oder Copolykondensat(e) der Terephthalsäure, wie beispielhaft und vorzugsweise Poly- oder Copolyethylenterephthalat (PET oder CoPET), glycol-modifiziertes PET (PETG), glycol-modifiziertes Poly- oder Copolycyclohexandimethylenterephthalat (PCTG) oder Poly- oder Copolybutylenterephthalat (PBT oder CoPBT)), Polyamid (PA), Poly- oder Copolykondensat(e) der Naphthalindicarbonsäure, wie beispielhaft und vorzugsweise Polyethylenglykolnaphthalat (PEN), Poly- oder Copolykondensat(e) wenigstens einer Cycloalkyldicarbonsäure, wie beispielhaft und vorzugsweise Polycyclohexandimethanolcyclohexandicarbonsäure (PCCD), Polysulfone (PSU), Mischungen aus den vorangehend genannten oder deren Blends, vorzugsweise ein oder mehrere Polycarbonate oder Copolycarbonate auf Basis von Diphenolen, Poly- oder Copoly(meth)acrylate, Poly- oder Copolykondensateder Terephthalsäure oder deren Blends.

Besonders bevorzugte thermoplastische Kunststoffe sind ein oder mehrere Polycarbonat(e) oder Copolycarbonat(e) auf Basis von Diphenolen oder Blends enthaltend wenigstens ein Polycarbonat oder Copolycarbonat. Ganz besonders bevorzugt sind Blends enthaltend wenigstens ein Polycarbonat oder Copolycarbonat und wenigstens ein Poly- oder Copolykondensat der Terephthalsäure, der Naphthalindicarbonsäure oder einer Cycloalkyldicarbonsäure, bevorzugt der Cyclohexandicarbonsäure Ganz besonders bevorzugt sind Polycarbonate oder Copolycarbonate, insbesondere mit mittleren Molekulargewichten Mw von 500 bis 100 000, bevorzugt von 10 000 bis 80 000, besonders bevorzugt von 15 000 bis 40 000 oder deren Blends mit wenigstens einem Poly- oder Copolykondensat der Terephthalsäure mit mittleren Molekulargewichten Mw von 10.000 bis 200.000, bevorzugt von 21.000 bis 120.000.

Als Poly- oder Copolykondensate der Terephthalsäure eignen sich in bevorzugten Ausführungsformen der Erfindung Polyalkylenterephthalate. Geeignete Polyalkylenterephthalate sind beispielsweise Reaktionsprodukte aus aromatischen Dicarbonsäuren oder ihren reaktionsfähigen Derivaten (z. B. Dimethylestern oder Anhydriden) und aliphatischen, cylcoaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Karl-Hanser-Verlag, München 1973).

Bevorzugte Polyalkylenterephthalate enthalten mindestens 80 Mol-%, vorzugsweise 90 Mol-% Terephthalsäurereste, bezogen auf die Dicarbonsäurekomponente, und mindestens 80 Mol-%, vorzugsweise mindestens 90 Mol-% Ethylenglykol- und/oder Butandiol-1,4- und/oder 1,4-Cyclohexandimethanol-Reste, bezogen auf die Diolkomponente.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie beispielsweise Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate können neben Ethylen- bzw. Butandiol-1,4-glykol-Resten bis zu 80 Mol-% anderer aliphatischer Diole mit 3 bis 12 C-Atomen oder cycloaliphatischer Diole mit 6 bis 21 C-Atomen enthalten, z. B. Reste von Propandiol-1,3, 2-Ethylpropandiol-1,3, Neopentylglykol, Pentan-diol-1,5, Hexandiol-1,6, Cyclohexan-dimethanol-1,4, 3-Methylpentandiol-2,4, 2-Methylpentandiol-2,4, 2,2,4-Trimethylpentandiol-1,3 und 2-Ethylhexandiol-1,6, 2,2-Diethylpropandiol-1,3, Hexandiol-2,5, 1,4-Di-([beta]-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-[beta]-hydroxyethoxyphenyl)-propan und 2,2-Bis-(4-hydroxypropoxyphenyl)-propan (vgl. DE-OS 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäuren, wie sie z. B. in der DE-OS 19 00 270 und der US-PS 3 692 744 beschrieben sind, verzweigt werden. Beispiele bevorzugter Verzweigungsmittel sind Trimesinsäure, Trimellitsäure, Trimethylolethan und -propan und Pentaerythrit.

Vorzugsweise wird nicht mehr als 1 Mol-% des Verzweigungsmittels, bezogen auf die Säurekomponente, verwendet.

Besonders bevorzugt sind Polyalkylenterephthalate, die allein aus Terephthalsäure und deren reaktionsfähigen Derivaten (z. B. deren Dialkylestern) und Ethylenglykol und/oder Butandiol-1,4 und/oder 1,4-Cyclohexandimethanol-Reste hergestellt worden sind, und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/butandiol-1,4)-terephthalate.

Die als Komponente vorzugsweise verwendeten Polyalkylenterephthalate besitzen bevorzugt eine intrinsische Viskosität von ca. 0,4 bis 1,5 dl/g, vorzugsweise 0,5 bis 1,3 dl/g, jeweils gemessen in Phenol/o-Dichlorbenzol (1:1 Gew.-Teile) bei 25°C.

In besonders bevorzugten Ausführungsformen der Erfindung handelt es sich bei dem Blend von wenigstens einem Polycarbonat oder Copolycarbonat mit wenigstens einem Poly- oder Copolykondensat der Terephthalsäure um einen Blend aus wenigstens einem Polycarbonat oder Copolycarbonat mit Poly- oder Copolybutylenterephthalat oder glycol-modifiziertem Poly- oder Copolycyclohexandimethylenterephthalat. Bei einem solchen Blend aus Polycarbonat oder Copolycarbonat mit Poly- oder Copolybutylenterephthalat oder glycol-modifiziertem Poly- oder Copolycyclohexandimethylenterephthalat kann es sich bevorzugt um einen solchen mit 1 bis 90 Gew.-% Polycarbonat oder Copolycarbonat und 99 bis 10 Gew.-% Poly- oder Copolybutylenterephthalat oder glycol-modifiziertem Poly- oder Copolycyclohexandimethylenterephthalat, vorzugsweise mit 1 bis 90 Gew.-% Polycarbonat und 99 bis 10 Gew.-% Polybutylenterephthalat oder glycol-modifiziertem Polycyclohexandimethylenterephthalat handeln, wobei sich die Anteile zu 100 Gew.-% addieren. Besonders bevorzugt kann es sich bei einem solchen Blend aus Polycarbonat oder Copolycarbonat mit Poly- oder Copolybutylenterephthalat oder glycol-modifiziertes Poly- oder Copolycyclohexandimethylenterephthalat um einen solchen mit 20 bis 85 Gew.-% Polycarbonat oder Copolycarbonat und 80 bis 15 Gew.-% Poly- oder Copolybutylenterephthalat oder glycol-modifiziertem Poly- oder Copolycyclohexandimethylenterephthalat, vorzugsweise mit 20 bis 85 Gew.-% Polycarbonat und 80 bis 15 Gew.-% Polybutylenterephthalat oder glycol-modifiziertem Polycyclohexandimethylenterephthalat handeln, wobei sich die Anteile zu 100 Gew.-% addieren. Ganz besonders bevorzugt kann es sich bei einem solchen Blend aus Polycarbonat oder Copolycarbonat mit Poly- oder Copolybutylenterephthalat oder glycol-modifiziertem Poly- oder Copolycyclohexandimethylenterephthalat um einen solchen mit 35 bis 80 Gew.-% Polycarbonat oder Copolycarbonat und 65 bis 20 Gew.-% Poly- oder Copolybutylenterephthalat oder glycol-modifiziertem Poly- oder Copolycyclohexandimethylenterephthalat, vorzugsweise mit 35 bis 80 Gew.-% Polycarbonat und 65 bis 20 Gew.-% Polybutylenterephthalat oder glycol-modifiziertem Polycyclohexandimethylenterephthalat handeln, wobei sich die Anteile zu 100 Gew.-% addieren. In ganz besonders bevorzugten Ausführungsformen kann es sich um Blends aus Polycarbonat und glycol-modifiziertem Polycyclohexandimethylenterephthalat in den vorangehend genannten Zusammensetzungen handeln.

Als Polycarbonate oder Copolycarbonate eignen sich in bevorzugten Ausführungsformen besonders aromatische Polycarbonate oder Copolycarbonate.

Die Polycarbonate oder Copolycarbonate können in bekannter Weise linear oder verzweigt sein.

Die Herstellung dieser Polycarbonate kann in bekannter Weise aus Diphenolen, Kohlensäurederivaten, gegebenenfalls Kettenabbrechern und gegebenenfalls Verzweigern erfolgen. Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P. R. Müller, H. Nouvertne', BAYER AG, "Polycarbonates" in Encyclopedia of Polymer Science and Engineering, Volume 11, Second Edition, 1988, Seiten 648-718 und schließlich auf Dres. U. Grigo, K. Kirchner und P. R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Geeignete Diphenole können beispielsweise Dihydroxyarylverbindungen der allgemeinen Formel (I) sein,

HO-Z-OH (I)

worin Z ein aromatischer Rest mit 6 bis 34 C-Atomen ist, der einen oder mehrere gegebenenfalls substituierte aromatische Kerne und aliphatische oder cycloaliphatische Reste bzw. Alkylaryle oder Heteroatome als Brückenglieder enthalten kann.

Beispiele für geeignete Dihydroxyarylverbindungen sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole, sowie deren kemalkylierte und kernhalogenierte Verbindungen.

Diese und weitere geeignete andere Dihydroxyarylverbindungen sind z.B. in DE-A 3 832 396, FR-A 1 561 518, in H. Schnell, Chemistry and Physics of Polycarbonates, Interscience Publishers, New York 1964, S. 28 ff.; S.102 ff. und in D.G. Legrand, J.T. Bendler, Handbook of Polycarbonate Science and Technology, Marcel Dekker New York 2000, S. 72 ff. beschrieben.

Bevorzugte Dihydroxyarylverbindungen sind beispielsweise Resorcin, 4,4'-Dihydroxydiphenyl, Bis-(4-hydroxyphenyl)-methan, Bis-(3,5-dimethyl-4-hydroxyphenyl)-methan, Bis-(4-hydroxyphenyl)-diphenyl-methan, 1,1-Bis-(4-hydroxyphenyl)-1-phenyl-ethan, 1,1-Bis-(4-hydroxyphenyl)-1-(1-naphthyl)-ethan, 1,1-Bis-(4-hydroxyphenyl)-1-(2-naphthyl)-ethan, 2,2-Bis-(4-hydroxyphenyl)-propan, 2,2-Bis-(3-methyl-4-hydroxyphenyl)-propan, 2,2-Bis-(3,5-dimethyl-4-hydroxyphenyl)-propan, 2,2-Bis-(4-hydroxyphenyl)-1-phenyl-propan, 2,2-Bis-(4-hydroxyphenyl)-hexafluor-propan, 2,4-Bis-(4-hydroxyphenyl)-2-methyl-butan, 2,4-Bis-(3,5-dimethyl-4-hydroxyphenyl)-2-methylbutan, 1,1-Bis-(4-hydroxyphenyl)-cyclohexan, 1,1-Bis-(3,5-dimethyl-4-hydroxyphenyl)-cylohexan, 1,1-Bis-(4-hydroxyphenyl)-4-methyl-cylohexan, 1,3-Bis-[2-(4-hydroxyphenyl)-2-propyl]-benzol, 1,1'- Bis-(4-hydroxyphenyl)-3-diisopropyl-benzol, 1,1'-Bis-(4-hydroxyphenyl)-4-diisopropyl-benzol, 1,3-Bis-[2-(3,5-dimethyl-4-hydroxyphenyl)-2-propyl]-benzol, Bis-(4-hydroxyphenyl)-ether, Bis-(4-hydroxyphenyl)-sulfid, Bis-(4-hydroxyphenyl)-sulfon, Bis-(3,5-dimethyl-4-hydroxyphenyl)-sulfon und 2,2',3,3'-Tetrahydro-3,3,3',3'-tetramethyl-1,1'-spirobi-[1H-inden]-5,5'-diol oder Dihydroxydiphenylcycloalkane der Formel (Ia) 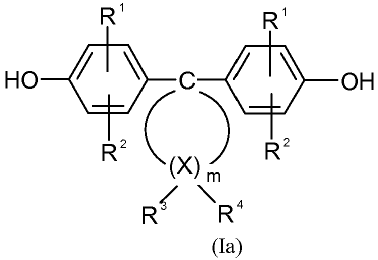 worin
R¹ und R² unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl,
m eine ganze Zahl von 4 bis 7, bevorzugt 4 oder 5,
R³ und R⁴ für jedes X individuell wählbar, unabhängig voneinander Wasserstoff oder C₁-C₆-Alkyl und
X Kohlenstoff bedeuten,
mit der Maßgabe, dass an mindestens einem Atom X, R³ und R⁴ gleichzeitig Alkyl bedeuten.

Bevorzugt sind in der Formel (Ia) an einem oder zwei Atom(en) X, insbesondere nur an einem Atom X R³ und R⁴ gleichzeitig Alkyl.

Bevorzugter Alkylrest für die Reste R³ und R⁴ in Formel (Ia) ist Methyl. Die X-Atome in alpha - Stellung zu dem Diphenylsubstituierten C-Atom (C-1) sind bevorzugt nicht dialkylsubstituiert, dagegen ist die Alkyldisubstitution in beta-Stellung zu C-1 bevorzugt.

Besonders bevorzugte Dihydroxydiphenylcycloalkane der Formenl (Ia) sind solche mit 5 und 6 Ring-C-Atomen X im cycloaliphatischen Rest (m = 4 oder 5 in Formel (Ia)), beispielsweise die Diphenole der Formeln (Ia-1) bis (Ia-3),

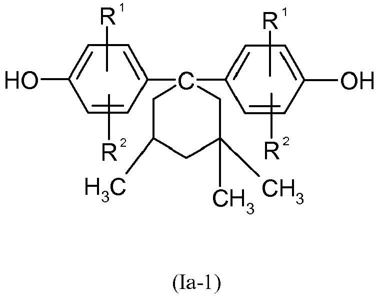

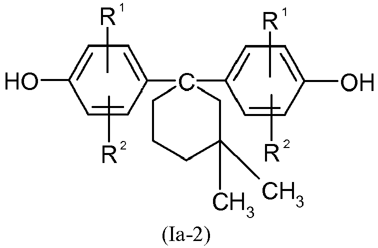

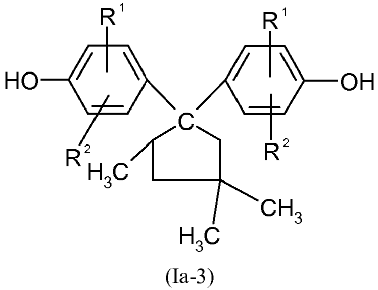

Ein ganz besonders bevorzugtes Dihydroxydiphenylcycloalkane der Formenl (Ia) ist 1,1-Bis-(4-hydroxyphenyl)-3,3,5-trimethyl-cyclohexan (Formel (Ia-1) mit R¹ und R² gleich H).

Solche Polycarbonate können gemäß der EP-A 359 953 aus Dihydroxydiphenylcycloalkanen der Formel (Ia) hergestellt werden.

Besonders bevorzugte Dihydroxyarylverbindungen sind Resorcin, 4,4'-Dihydroxydiphenyl, Bis-(4-hydroxyphenyl)-diphenyl-methan, 1,1-Bis-(4-hydroxyphenyl)-1 -phenyl-ethan, Bis-(4-hydroxyphenyl)-1-(1-naphthyl)-ethan, Bis-(4-hydroxyphenyl)-1-(2-naphthyl)-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan, 1,1-Bis-(3,5-dimethyl-4-hydroxyphenyl)-cyclohexan, 1,1 -Bis-(4-hydroxyphenyl)-3,3,5-trimethyl-cyclohexan, 1,1'-Bis-(4-hydroxyphenyl)-3-diisopropyl-benzol und 1,1'- Bis-(4-hydroxyphenyl)-4-diisopropyl-benzol.

Ganz besonders bevorzugte Dihydroxyarylverbindungen sind 4,4'-Dihydroxydiphenyl und 2,2-Bis-(4-hydroxyphenyl)-propan.

Es können sowohl eine Dihydroxyarylverbindung unter Bildung von Homopolycarbonaten als auch verschiedene Dihydroxyarylverbindungen unter Bildung von Copolycarbonaten verwendet werden. Es können sowohl eine Dihydroxyarylverbindung der Formel (I) oder (Ia) unter Bildung von Homopolycarbonaten als auch mehrere eine Dihydroxyarylverbindungen der Formel (I) und/oder (Ia) unter Bildung von Copolycarbonaten verwendet werden. Dabei können die verschiedenen Dihydroxyarylverbindungen sowohl statistisch als auch blockweise miteinander verknüpft sein. Im Falle von Copolycarbonaten aus Dihydroxyarylverbindungen der Formel (I) und (Ia), beträgt das molare Verhältnis von Dihydroxyarylverbindungen der Formel (Ia) zu den gegebenenfalls mitzuverwendenden anderen Dihydroxyarylverbindungen der Formel (I) vorzugsweise zwischen 99 Mol-% (Ia) zu 1 Mol-% (I) und 2 Mol-% (Ia) zu 98 Mol-% (I), vorzugsweise zwischen 99 Mol-% (Ia) zu 1 Mol-% (I) und 10 Mol-% (Ia) zu 90 Mol-% (I) und insbesondere zwischen 99 Mol-% (Ia) zu 1 Mol-% (I) und 30 Mol-% (Ia) zu 70 Mol-% (I).

Ein ganz besonders bevorzugtes Copolycarbonat kann unter Verwendung von 1,1-Bis-(4-hydroxyphenyl)-3,3,5-trimethyl-cyclohexan und 2,2-Bis-(4-hydroxyphenyl)-propan Dihydroxyarylverbindungen der Formel (Ia) und (I) hergestellt werden.

Geeignete Kohlensäurederivate können beispielsweise Diarylcarbonate der allgemeinen Formel (II) sein, 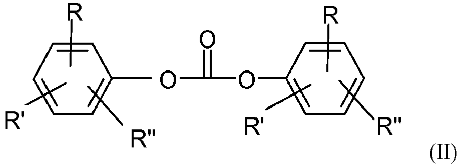 worin
R, R' und R" unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen, R weiterhin auch -COO-R''' bedeuten kann, wobei R''' für Wasserstoff, lineares oder verzweigtes C₁-C₃₄-Alkyl, C₇-C₃₄-Alkylaryl oder C₆-C₃₄-Aryl steht.

Bevorzugte Diarylcarbonate sind beispielsweise Diphenylcarbonat, Methylphenyl-phenylcarbonate und Di-(methylphenyl)-carbonate, 4-Ethylphenyl-phenyl-carbonat, Di-(4-ethylphenyl)-carbonat, 4-n-Propylphenyl-phenyl-carbonat, Di-(4-n-propylphenyl)-carbonat, 4-iso-Propylphenyl-phenyl-carbonat, Di-(4-iso-propylphenyl)-carbonat, 4-n-Butylphenyl-phenyl-carbonat, Di-(4-n-butylphenyl)-carbonat, 4-iso-Butylphenyl-phenyl-carbonat, Di-(4-iso-butylphenyl)-carbonat, 4-tert-Butylphenyl-phenyl-carbonat, Di-(4-tert-butylphenyl)-carbonat, 4-n-Pentylphenyl-phenyl-carbonat, Di-(4-n-pentylphenyl)-carbonat, 4-n-Hexylphenyl-phenyl-carbonat, Di-(4-n-hexylphenyl)-carbonat, 4-iso-Octylphenyl-phenyl-carbonat, Di-(4-iso-octylphenyl)-carbonat, 4-n-Nonylphenyl-phenyl-carbonat, Di-(4-n-nonylphenyl)-carbonat, 4-Cyclohexylphenyl-phenyl-carbonat, Di-(4-cyclohexylphenyl)-carbonat, 4-(1-Methyl-1-phenylethyl)-phenyl-phenyl-carbonat, Di-[4-(1-methyl-1-phenylethyl)-phenyl]-carbonat, Biphenyl-4-yl-phenyl-carbonat, Di-(biphenyl-4-yl)-carbonat, 4-(1-Naphthyl)-phenyl-phenyl-carbonat, 4-(2-Naphthyl)-phenyl-phenyl-carbonat, Di-[4-(1-naphthyl)-phenyl] -carbonat, Di-[4-(2-naphthyl)phenyl] -carbonat, 4-Phenoxyphenyl-phenyl-carbonat, Di-(4-phenoxyphenyl)-carbonat, 3-Pentadecylphenyl-phenyl-carbonat, Di-(3-pentadecylphenyl)-carbonat, 4-Tritylphenyl-phenyl-carbonat, Di-(4-tritylphenyl)-carbonat, Methylsalicylat-phenyl-carbonat, Di-(methylsalicylat)-carbonat, Ethylsalicylat-phenyl-carbonat, Di-(ethylsalicylat)-carbonat, n-Propylsalicylat-phenyl-carbonat, Di-(n-propylsalicylat)-carbonat, iso-Propylsalicylat-phenyl-carbonat, Di-(iso-propylsalicylat)-carbonat, n-Butylsalicylat-phenyl-carbonat, Di-(n-butylsalicylat)-carbonat, iso-Butylsalicylat-phenyl-carbonat, Di-(iso-butylsalicylat)-carbonat, tert-Butylsalicylat-phenyl-carbonat, Di-(tert-butylsalicylat)-carbonat, Di-(phenylsalicylat)-carbonat und Di-(benzylsalicylat)-carbonat.

Besonders bevorzugte Diarylverbindungen sind Diphenylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1-Methyl-1-phenylethyl)-phenyl-phenyl-carbonat, Di-[4-(1-methyl-1-phenylethyl)-phenyl]-carbonat und Di-(methylsalicylat)-carbonat. Ganz besonders bevorzugt ist Diphenylcarbonat.

Es können sowohl ein Diarylcarbonat als auch verschiedene Diarylcarbonate verwendet werden.

Zur Steuerung bzw. Veränderung der Endgruppen können zusätzlich beispielsweise eine oder mehrere Monohydroxyarylverbindung(en) als Kettenabbrecher eingesetzt werden, die nicht zur Herstellung des oder der verwendeten Diarylcarbonat(e) verwendet wurde(n). Dabei kann es sich um solche der allgemeinen Formel (III) handeln, 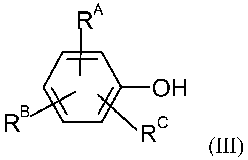 wobei
R^{A} für lineares oder verzweigtes C₁-C₃₄-Alkyl, C₇-C₃₄-Alkylaryl, C₆-C₃₄-Aryl oder für -COO-R^{D} steht, wobei R^{D} für Wasserstoff, lineares oder verzweigtes C₁-C₃₄-Alkyl, C₇-C₃₄-Alkylaryl oder C₆-C₃₄-Aryl steht, und
R^{B}, R^{C} unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen.

Solche Monohydroxyarylverbindungen sind beispielsweise 1-, 2- oder 3-Methylphenol, 2,4-Dimethylphenol 4-Ethylphenol, 4-n-Propylphenol, 4-iso-Propylphenol, 4-n-Butylphenol, 4-isoButylphenol, 4-tert-Butylphenol, 4-n-Pentylphenol, 4-n-Hexylphenol, 4-iso-Octylphenol, 4-n-Nonylphenol, 3-Pentadecylphenol, 4-Cyclohexylphenol, 4-(1-Methyl-1-phenylethyl)-phenol, 4-Phenylphenol, 4-Phenoxyphenol, 4-(1-Naphthyl)-phenol, 4-(2-Naphthyl)-phenol, 4-Tritylphenol, Methylsalicylat, Ethylsalicylat, n-Propylsalicylat, iso-Propylsalicylat, n-Butylsalicylat, iso-Butylsalicylat, tert-Butylsalicylat, Phenylsalicylat und Benzylsalicylat.

Bevorzugt sind 4-tert-Butylphenol, 4-iso-Octylphenol und 3-Pentadecylphenol.

Geeignete Verzweiger können Verbindungen mit drei und mehr funktionellen Gruppen, vorzugsweise solche mit drei oder mehr Hydroxylgruppen.

Geeignete Verbindungen mit drei oder mehr phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl]-propan, 2,4-Bis-(4-hydroxyphenyl-isopropyl)-phenol und Tetra-(4-hydroxyphenyl)-methan.

Sonstige geeignete Verbindungen mit drei und mehr funktionellen Gruppen sind beispielsweise 2,4-Dihydroxybenzoesäure, Trimesinsäure(trichlorid), Cyanursäuretrichlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die Lackzusammensetzung der Beschichtung der erfindungsgemäßen Folie enthält
a) Urethan(meth)acrylats, welches (Meth)acryloylgruppen und eine Isocyanat-Funktionalität von ≥ 1,75 bis ≤ 2,3, vorzugsweise von ≥ 1,85 bis ≤ 2,2, ganz besonders bevorzugt von ≥ 1,9 bis ≤ 2,1 aufweist,
b) acryliertes Acrylat, welches noch freie isocyanatreaktive Gruppen aufweist,
c) optional Additive und/oder Lösungsmittel

Die Urethan(meth)acrylate a), welche (Meth)acryloylgruppen und eine Isocyanat-Funktionalität (NCO-Funktionalität) von ≥ 1,75 bis ≤ 2,3, vorzugsweise von ≥ 1,85 bis ≤ 2,2, ganz besonders bevorzugt von ≥ 1,9 bis ≤ 2,1 aufweisen, sind vorzugsweise erhältlich durch die Reaktion
a-1) eines (Meth)acryloylgruppen aufweisenden einwertigen Alkohols und
a-2) Polyisocyanaten mit einer Isocyanat-Funktionalität im Bereich von ≥ 2,5 und ≤ 6,0, vorzugsweise von ≥ 2,7 und ≤ 4,5, besonders bevorzugt von ≥ 2,8 und ≤ 3,5.

Herstellverfahren für Urethan(meth)acrylate sind grundsätzlich bekannt und beschrieben, z.B. in den DE-A 1 644 798, DE-A 2 115 373 oder DE-A 2 737 406. Für die Herstellung der erfindungsgemäßen, freie Isocyanatgruppen aufweisenden Urethan(meth)acrylate ist das Verhältnis von NCO-Gruppen zu OH-Gruppen 1:0,2 bis 1:0,8, vorzugsweise von 1:0,3 bis 1:0,6. Die erfindungsgemäß eingesetzten Urethan(meth)acrylate a) weisen neben den Meth(acryloyl)gruppen eine NCO-Funktionalität von ≥ 1,75 bis ≤ 2,3, vorzugsweise von ≥ 1,85 bis ≤ 2,2, ganz besonders bevorzugt von ≥ 1,9 bis ≤ 2,1 auf.

Unter (Meth)acryloylgruppen aufweisenden einwertigen Alkoholen sind sowohl eine freie Hydroxylgruppe aufweisende Ester der (Meth)acrylsäure mit zweiwertigen Alkoholen zu verstehen, wie beispielsweise 2-Hydroxylethyl, 2- oder 3-Hydroxylpropyl oder 2-, 3- oder 4-Hydroxybutyl-(meth)acrylat als auch beliebige Gemische aus derartigen Verbindungen. Außerdem kommen einwertige (Meth)acryloylgruppen aufweisende Alkohole oder im Wesentlichen aus derartigen Alkoholen bestehende Umsetzungsprodukte in Betracht, die durch Veresterung von n-wertigen Alkoholen mit (Meth)acrylsäure erhalten werden, wobei als Alkohole auch Gemische von unterschiedlichen Alkoholen eingesetzt werden können, so dass n für eine ganze oder im statistischen Mittel gebrochene Zahl von größer 2 bis 4, vorzugsweise 3 steht, und wobei pro Mol der genannten Alkohole von (n-0,8) bis (n-1,2), vorzugsweise (n-1) Mol (Meth)acrylsäure eingesetzt werden. Zu diesen Verbindungen bzw. Produktgemischen gehören beispielsweise die Umsetzungsprodukte von i) Glycerin, Trimethylolpropan und/oder Pentaerythrit, von niedermolekularen Alkoxylierungsprodukten derartiger Alkohole, wie beispielsweise ethoxyliertem oder propoxyliertem Trimethylolpropan, wie beispielsweise dem Anlagerungsprodukt von Ethylenoxid an Trimethylolpropan der OH-Zahl 550 oder von beliebigen Gemischen derartiger mindestens dreiwertiger Alkohole mit zweiwertigen Alkoholen, wie beispielsweise Ethylenglykol oder Propylenglykol mit (ii) (Meth)acrylsäure im genannten Molverhältnis.

Diese Verbindungen weisen ein Molekulargewicht von 116 bis 1000, vorzugsweise von 116 bis 750 und besonders bevorzugt von 116 bis 158 auf.

Als Polyisocyanate sind grundsätzlich aromatische, araliphatische und aliphatische geeignet, wobei aliphatische Verbindungen bevorzugt sind, z.B. Butylendiisocyanat, Hexamethylendiisocynat (HDI), Isophorondiisocyanat (IPDI), 2,2,4-Trimethylhexamethylendiisocyanat und/oder 2,4,4-Trimethylhexamethylendiisocyanat, Neopentyldiisocyanat, Dicyclohexylmethandiisocyanat oder 4-Isocyanatomethyl-1,8-octandiisocyanat oder deren Derivate mit Urethan-, Isocyanurat, Allophanat-, Biuret-, Uretdion-, Iminooxadiazindionstruktur und Mischungen derselben. Geeignet sind auch Urethangruppen aufweisende Polyisocyanate auf Basis von Polyisocyanaten und zweiwertigen Alkoholen. Diese Polyisocyanate weisen eine NCO-Funktionalität im Bereich von ≥ 2,5 und ≤ 6,0, vorzugsweise von ≥ 2,7 und ≤ 4,5, besonders bevorzugt von ≥ 2,8 und ≤ 3,5 auf.

Die Additionsreaktion der Komponenten a-1) und a-2) kann in an sich bekannter Weise mittels geeigneter Katalysatoren, wie beispielsweise Zinkoctoat, Dibutylzinndilaurat oder tertiären Aminen beschleunigt werden.

In einer bevorzugten Variante wird bei der Herstellung ein sauerstoffhaltiges Gas, bevorzugt Luft, durch die Reaktionsmischung geleitet, um unerwünschte Polymerisation der (Meth)acrylate zu verhindern.

Acrylierte Acrylate b), welche noch freie isocyanatreaktive Gruppen aufweisen, weisen vorzugsweise Hydroxylgruppen als isocyanatreaktive Gruppen auf. Vorzugsweise werden die erfindungsgemäß einzusetzenden acrylierten Acrylate b) in Lösungsmittel gelöst, vorzugsweise in Butylacetat, besonders bevorzugt eine 45 %-ige Lösung Butylacetat. Die acrylierten Acrylate b) weisen vorteilhafterweise eine Viskosität in Lösung von 2600 bis 3400 mPa*s bei 23°C, vorzugsweise von 2800 bis 3200 mPa*s bei 23°C auf. Ein kommerziell erhältliches acryliertes Acrylat ist beispielsweise EBECRYL™ 1200 der Firma Allnex Belgium SA/NV.

Optional können Additive und/oder Lösungsmittel in der Lackzusammensetzung enthalten sein, die üblicherweise in der Technologie der Lacke, Farben, Druckfarben eingesetzt werden. Beispiele hierfür werden nachfolgend beschrieben.

Beispielsweise können der Lackzusammensetzung Fotoinitiatoren zugesetzt werden. Fotoinitiatoren sind durch aktinische Strahlung aktivierbare Initiatoren, die eine radikalische Polymerisation der entsprechenden polymerisierbaren Gruppen auslösen. Fotoinitiatoren sind an sich bekannte, kommerziell vertriebene Verbindungen, wobei zwischen unimolekularen (Typ I) und bimolekularen (Typ II) Initiatoren unterschieden wird. (Typ I)-Systeme sind zum Beispiel aromatische Ketonverbindungen, zum Beispiel Benzophenone in Kombination mit tertiären Aminen, Alkylbenzophenone, 4,4'-Bis(dimethylamino)benzophenon (Michlers Keton), Anthron und halogenierte Benzophenone oder Mischungen der genannten Typen. Weiter geeignet sind (Typ II)-Initiatoren wie Benzoin und seine Derivate, Benzilketale, Acylphosphinoxide zum Beispiel 2,4,6-Trimethyl-benzoyl-diphenylphosphinoxid, Bisacylphosphinoxide, Phenylglyoxylsäureester, Campherchinon, α-Aminoalkylphenone, α,α-Dialkoxyacetophenone und α-Hydroxyalkylphenone. Es kann vorteilhaft sein auch Gemische dieser Verbindungen einzusetzen. Geeignete Initiatoren sind kommerziell erhältlich beispielsweise unter der Bezeichnung Irgacure™, Darocur™ und Esacure™ (IGM Resins BV).

Insbesondere sind dies Stabilisatoren, Lichtschutzmittel wie UV-Absorber und sterisch gehinderte Amine (HALS), weiterhin Antioxidantien sowie Lackhilfsmittel, zum Beispiel Antiabsetzmittel, Entschäumungs- und/oder Netzmittel, Verlaufmittel, Weichmacher, Antistatika, Katalysatoren, Hilfslösemittel und/oder Verdicker sowie Pigmente, Farbstoffe und/oder Mattierungsmittel. Geeignete Lösungsmittel sind abgestimmt auf die verwendeten Bindemittel sowie das Applikationsverfahren. Beispiele sind Ethylacetat, Butylacetat, Methoxyproylacetat, Diacetonalkohol, Glykole, Glykolether, Xylol oder Solventnaphtha der Fa. Exxon-Chemie als aromatenhaltiges Lösemittel sowie Gemische der genannten Lösemittel.

Die in der Lackzusammensetzung optional enthaltenen Additive können in einer Menge von 0 bis ≤ 5 Gew.-%, vorzugsweise 0,1 bis ≤ 3,5 Gew.-%, bezogen auf Festkörper der Lackzusammensetzung eingesetzt werden. Lösungsmittel können üblicherweise in einer Menge von 0 bis 75 Gew.-%, vorzugsweise von 0 bis 60 Gew.-% eingesetzt werden.

Die Komponenten a) und b) der Lackzusammensetzung werden vorzugsweise im Äquivalentverhältnis 0,5 : 1,0 bis 1,1 : 1,0, vorzugsweise 0,6 : 1 bis 1,0 : 1,0 besonders bevorzugt von 0,7 : 1 bis 0,95 : 1 in der Lackzusammensetzung eingesetzt.

Die erfindungsgemäße beschichtete Folie kann nach Aufbringen der Beschichtung bei einer Temperatur von ≥ 50 °C, vorzugsweise ≥ 80 °C bis ≤ 130 °C, besonders bevorzugt ≥ 100 °C bis ≤ 120 °C thermisch gehärtet werden. Die erfindungsgemäße Folie kann dann gelagert und/oder direkt weiter verarbeitet werden. Die Endhärtung mit aktinischer Strahlung erfolgt idealerweise erst nach der vollständigen Weiterverarbeitung zum gewünschten Endprodukt, vorzugsweise zu einem Schichtverbund, besonders bevorzugt zu einem Sicherheits- und/oder Wertdokument.

Die Beschichtung der erfindungsgemäßen Folie weist nach thermischer Härtung vorzugsweise eine Dicke von im Bereich von ≥ 2 bis ≤ 20 µm, vorzugsweise von ≥ 3 bis ≤ 15 µm, besonders bevorzugt von ≥ 5 bis ≤ 11 µm auf.

Die Gesamtdicke der erfindungsgemäßen Folie kann idealerweise ≥ 10 bis ≤ 150 µm, vorzugsweise ≥ 20 bis ≤ 130 µm, besonders bevorzugt ≥ 25 bis ≤ 100 µm betragen.

Weiterer Gegenstand der Erfindung ist ein Verfahren zur Herstellung der vorstehend beschriebenen Folie. Dieses Verfahren umfasst die Schritte
i) Bereitstellung einer thermoplastischen Kunststofffolie,
ii) Beschichtung der thermoplastischen Folie mit einer Lackzusammensetzung enthaltend
   a) Urethan(meth)acrylat, welches (Meth)acryloylgruppen und eine Isocyanat-Funktionalität von ≥ 1,75 bis ≤ 2,2, vorzugsweise von ≥ 1,85 bis ≤ 2,3, ganz besonders bevorzugt von ≥ 1,9 bis ≤ 2,1 aufweist,
   b) acryliertes Acrylat, welches noch freie isocyanatreaktive Gruppen aufweist,
   c) optional Additive und/oder Lösungsmittel,
iii) Thermische Härtung der beschichteten Folie.

Nach dem Verfahrensschritt iii) kann die erfindungsgemäße Folie gelagert und/oder direkt weiter verarbeitet werden.

Zur Vermeidung von Wiederholung wird für die Beschreibung und vorteilhafte Ausführungsformen der thermoplastischen Kunststofffolie sowie der Lackzusammensetzung auf das Vorstehende verwiesen.

Die thermoplastische Folie ist vorzugsweise eine einschichtige thermoplastische Kunststofffolie.

Die Aufbringung der Lackzusammensetzung in Schritt ii) auf die thermoplastische Kunststofffolie erfolgt nach den dem Fachmann bekannten Methoden wie beispielsweise mittels Walzen, Rakeln, Fluten, Spritzen oder Gießen. Ebenfalls möglich sind Druckverfahren, Tauchen, Transferverfahren und Streichen. Die Applikation sollte unter Ausschluss von Strahlung erfolgen, da diese sonst zu einer vorzeitigen Polymerisation der (Meth)acryloyl-Doppelbindungen der Lackzusammensetzung führen kann.

Die thermische Härtung der Lackzusammensetzung in Schritt iii) schließt sich idealerweise direkt an die Beschichtung der Folie mit der erfindungsgemäßen Lackzusammensetzung an. Hierzu wird insbesondere mit erhöhten Temperaturen in Öfen und mit bewegter und gegebenenfalls auch entfeuchteter Luft (Konvektionsöfen, Düsentrockner) sowie Wärmestrahlung (IR, NIR) gearbeitet. Weiterhin können Mikrowellen zum Einsatz kommen. Es ist möglich und vorteilhaft, mehrere dieser Trocknungsverfahren zu kombinieren.

Vorteilhafterweise werden die Bedingungen für die thermische Härtung so gewählt, dass durch die erhöhte Temperatur und/oder die Wärmestrahlung keine Polymerisation (Vernetzung) der (Meth)acryloylgruppen ausgelöst wird. Weiterhin ist die maximal erreichte Temperatur zweckmäßigerweise so niedrig zu wählen, dass sich die Folie nicht unkontrolliert verformt. Die thermische Härtung kann bei Temperaturen von ≥ 50 °C, vorzugsweise ≥ 80 °C bis ≤ 130 °C, besonders bevorzugt ≥ 100 °C bis ≤ 120 °C.

Nach dem thermischen Härtungsschritt iii) kann die beschichtete Folie, gegebenenfalls nach Kaschierung mit einer Schutzfolie auf der Beschichtung, aufgerollt werden. Das Aufrollen kann geschehen, ohne dass es zum Verkleben der Beschichtung mit der Rückseite der Substratfolie oder der Kaschierfolie kommt. Es ist aber auch möglich, die beschichtete Folie zuzuschneiden und die Zuschnitte einzeln oder als Stapel der Weiterverarbeitung zuzuführen.

In einer vorteilhaften Ausführungsform ist wenigstens eine erfindungsgemäße Folie in einem Schichtaufbau, vorzugsweise in einem Sicherheits- und/oder Wertdokument, besonders bevorzugt in einem Identifikationsdokument enthalten. Solche Schichtaufbauten, vorzugsweise Sicherheits- und/oder Wertdokumente, besonders bevorzugt Identifikationsdokumente, können nach den dem Fachmann bekannten Methoden beispielsweise durch Lamination eines Stapels enthaltend mehrerer thermoplastischer Kunststofffolien hergestellt werden, wobei dieser Schichtaufbau, vorzugsweise Sicherheits- und/oder Wertdokument, besonders bevorzugt Identifikationsdokument, wenigstens eine erfindungsgemäße Folie enthält, und wobei die beschichtete Seite der erfindungsgemäßen Folie nach außen gerichtet ist. Besonders bevorzugt enthält der Schichtverbund, vorzugsweise in einem Sicherheits- und/oder Wertdokument, ganz besonders bevorzugt in einem Identifikationsdokument, wenigstens zwei erfindungsgemäße Folien, wobei die beschichteten Seiten der erfindungsgemäßen Folie jeweils nach außen gerichtet sind.

Insbesondere für die Herstellung von Sicherheits- und/oder Wertdokumenten kann das Aufbringen von beispielsweise sicherheitsrelevanten Informationen in Form einer Prägung auf die obere Schicht erforderlich sein. Diese Prägungen können mit Strukturen im Mikrometer-Maßstab erfolgen und sind unter der Bezeichnung Multiple Laser Image (MLI) und Changeable Laser Image (CLI) bekannt. Diese Prägung kann während oder nach der Herstellung des erfindungsgemäßen Schichtaufbaus, vorzugsweise Sicherheits- und/oder Wertdokuments, besonders bevorzugt Identifikationsdokument, in wenigstens einer Außenschicht des erfindungsgemäßen Schichtaufbaus erfolgen.

Von dem Begriff der Information ist im Rahmen der Erfindung jede Information umfasst, die in irgendeiner Form abbildbar - und im Falle einer eingeprägten Information auch prägbar - ist. Dabei kann es sich beispielsweise um einzelne Zahlen, Zahlenkombinationen, einzelne Buchstaben, Buchstabenkombinationen, Wörter, Schriftzüge, Symbole, sich wiederholende Muster, Linienstrukturen, Ornamente, Bilder oder sonstige Abbildungen sowie Kombinationen aus diesen handeln.

Die Endhärtung mittels aktinischer Strahlung, vorzugsweise mittels UV-Strahlung, erfolgt in einem letzten Verfahrensschritt, vorzugsweise erst nach Herstellung des gewünschten Endprodukts, besonders bevorzugt nach Herstellung eines Schichtverbundes durch Lamination, wobei der Schichtverbund die erfindungsgemäße Folie auf wenigstens einer Außenseite des Schichtverbundes enthält, vorzugsweise auf beiden Außenseiten des Schichtverbundes.

Dem erfindungsgemäßen Verfahren kann sich daher optional nach den Schritten i) bis iii) folgende Verfahrensschritte anschließen:
iv) Herstellung eines Schichtaufbaus, vorzugsweise ein Sicherheits-und/oder Wertdokument, besonders bevorzugt Identifikationsdokument, enthaltend mehrere thermoplastische Kunststofffolien, wobei der Schichtaufbau, vorzugsweise Sicherheits- und/oder Wertdokument, besonders bevorzugt Identifikationsdokument, wenigstens eine erfindungsgemäße Folie enthält und wobei die beschichtete Seite der erfindungsgemäßen Folie nach außen gerichtet ist,
v) gegebenenfalls Aufbringung einer Prägung, vorzugsweise einer Prägung im Mikrometermaßstab, auf wenigstens einer Außenseite des Schichtaufbaus, während oder nach Schritt iv),
vi) Endhärtung des Schichtaufbaus, vorzugsweise Sicherheits- und/oder Wertdokuments, besonders bevorzugt Identifikationsdokuments, mittels aktinischer Strahlung, vorzugsweise mittels UV-Strahlung.

In einer weiteren Ausführungsform des erfindungsgemäßen Verfahrens kann in Schritt iv) der Schichtaufbau, vorzugsweise das Sicherheits-und/oder Wertdokument, besonders bevorzugt das Identifikationsdokument durch Lamination hergestellt werden. In einer besonders bevorzugten Ausführungsform weisen die Bleche für die Lamination eine Beschichtung auf, vorzugsweise eine Schmutz-abweisenden Beschichtung.

Unter Härtung mit aktinischer Strahlung versteht man die radikalische Polymerisation von ethylenisch ungesättigten Kohlenstoff-Kohlenstoff-Doppelbindungen mittels Initiatorradikalen, die durch Bestrahlung mit aktinischer Strahlung beispielsweise aus den vorstehend beschriebenen Fotoinitiatoren freigesetzt werden.

Die Strahlungshärtung erfolgt bevorzugt durch Einwirkung energiereicher Strahlung, also UV-Strahlung oder Tageslicht, zum Beispiel Licht der Wellenlänge von ≥ 200 nm bis ≤ 750 nm, oder durch Bestrahlen mit energiereichen Elektronen (Elektronenstrahlung, zum Beispiel von ≥ 90 keV bis ≤ 300 keV). Als Strahlungsquellen für Licht oder UV-Licht dienen beispielsweise Mittel- oder Hochdruckquecksilberdampflampen, wobei der Quecksilberdampf durch Dotierung mit anderen Elementen wie Gallium oder Eisen modifiziert sein kann. Laser, gepulste Lampen (unter der Bezeichnung UV-Blitzlichtstrahler bekannt), Halogenlampen oder Eximerstrahler sind ebenfalls einsetzbar. Die Strahler können ortsunbeweglich installiert sein, so dass das zu bestrahlende Gut mittels einer mechanischen Vorrichtung an der Strahlungsquelle vorbeibewegt wird, oder die Strahler können beweglich sein, und das zu bestrahlende Gut verändert bei der Härtung seinen Ort nicht. Die üblicherweise zur Vernetzung ausreichende Strahlungsdosis bei UV-Härtung liegt im Bereich von ≥ 80 mJ/cm² bis ≤ 5000 mJ/cm².

Die Bestrahlung kann gegebenenfalls auch unter Ausschluss von Sauerstoff, zum Beispiel unter Inertgas-Atmosphäre oder Sauerstoff-reduzierter Atmosphäre durchgeführt werden. Als Inertgase eignen sich bevorzugt Stickstoff, Kohlendioxid, Edelgase oder Verbrennungsgase. Des Weiteren kann die Bestrahlung erfolgen, indem die Beschichtung mit für die Strahlung transparenten Medien abgedeckt wird. Beispiele hierfür sind zum Beispiel Kunststofffolien, Glas oder Flüssigkeiten wie Wasser.

Weiterhin kann es je nach eingesetzter Folie vorteilhaft sein, die Bestrahlungsbedingungen so zu wählen, dass die thermische Belastung nicht zu groß wird. Insbesondere dünne Folien sowie Folien aus Materialien mit niedriger Glasübergangstemperatur können zur unkontrollierten Verformung neigen, wenn durch die Bestrahlung eine bestimmte Temperatur überschritten wird. In diesen Fällen ist es vorteilhaft, durch geeignete Filter oder Bauart der Strahler möglich wenig Infrarotstrahlung auf das Substrat einwirken zu lassen. Weiterhin kann durch Reduktion der entsprechenden Strahlendosis der unkontrollierten Verformung entgegengewirkt werden. Dabei ist jedoch zu beachten, dass für eine möglichst vollständige Polymerisation eine bestimmte Dosis und Intensität der Bestrahlung notwendig sind. Es ist in diesen Fällen besonders vorteilhaft, unter inerten oder sauerstoffreduzierten Bedingungen zu härten, da bei Reduktion des Sauerstoffanteils in der Atmosphäre oberhalb der Beschichtung die erforderliche Dosis zur Aushärtung abnimmt.

Besonders bevorzugt werden zur Härtung Quecksilberstrahler in ortsfesten Anlagen eingesetzt. Zur Härtung dieser Beschichtungen wird bevorzugt eine Dosis von ≥ 80 mJ/cm² bis ≤ 5000 mJ/cm², vorzugsweise ≥ 200 mJ/cm² bis ≤ 4000 mJ/cm², besonders bevorzugt ≥ 1000 mJ/cm² bis ≤ 3000mJ/cm² eingesetzt.

Es ist auch möglich, dass die erfindungsgemäße Folie auf der nicht mit der Beschichtung beschichteten Seite optional eine Klebstoffschicht aufweist. Für Klebstoffbeschichtungen sind beispielsweise solche basierend auf Polyurethan- oder Acrylatklebern geeignet. Derartige Klebstoffe sind dem Fachmann bekannt.

Für den Fall, dass die erfindungsgemäße Folie auf der nicht mit der Beschichtung beschichteten Seite optional eine Klebstoffschicht aufweist, ist bevorzugt die Verwendung eines latent reaktiven Klebstoffs. Latent reaktive Klebstoffe sind dem Fachmann bekannt. Bevorzugte latent reaktive Klebstoffe sind solche, die eine wässrige Dispersion aufweisen, die ein Di- oder Polyisocyanat mit Schmelz- bzw. Erweichungstemperatur von > 30°C und ein mit Isocyanat reaktives Polymer enthalten. Vorzugsweise weist eine solche wässrige Dispersion eine Viskosität von mindestens 2000 mPas auf. Weiterhin bevorzugt handelt es sich bei dem Isocyanat-reaktiven Polymer in dieser Dispersion um ein Polyurethan, das aus kristallisierenden Polymerketten aufgebaut ist, welche bei Messung mittels thermomechanischer Analyse (TMA) bei Temperaturen unter +110°C, bevorzugt bei Temperaturen unter +90°C, partiell oder vollständig dekristallisieren. Die Messung mittels TMA wird analog zu ISO 11359 Teil 3 "Bestimmung der Penetrationstemperatur" durchgeführt. Weiterhin bevorzugt handelt es sich bei dem Di- oder Polyisocyanat um ein solches ausgewählt aus der Gruppe aus Dimerisierungsprodukten, Trimerisierungsprodukten und Harnstoff-Derivaten des TDI (Toluylen-diisocyanat) bzw. IPDI (Isophorondiisocyanat). Solche latent reaktiven Klebstoffe sind beispielsweise in DE-A 10 2007 054 046 beschrieben. Durch die Verwendung solcher latent reaktiver Klebstoffe kann eine zusätzliche Erhöhung der Fälschungssicherheit des Sicherheits- und /oder Wertdokuments dadurch bewirkt werden, dass über die Kanten des Schichtaufbaus kein Wasserdampf und/oder Luft mehr ins Innere hinein diffundieren können und somit nicht mehr zu einer nachträglichen Delamination führen können. Solchen Schichtaufbauten können nicht mehr unzerstört getrennt werden.

Weiterer Gegenstand der Erfindung ist auch ein Schichtaufbau, umfassend wenigstens eine erfindungsgemäße Folie, wobei die beschichtete Seite der erfindungsgemäßen Folie nach außen gerichtet ist. In einer besonders bevorzugten Ausführungsform der Erfindung umfasst der Schichtverbund als wenigstens zwei erfindungsgemäße Folien, wobei die beschichtete Seite der erfindungsgemäßen Folie jeweils nach außen gerichtet ist. Vorzugsweise umfasst der erfindungsgemäße Schichtaufbau weiterhin mehrere thermoplastische Kunststofffolien.

Die erfindungsgemäßen Folien bietet den Vorteil, dass daraus hergestellte Schichtverbunde den hohen Laminationstemperaturen bei der Herstellung von Sicherheits- und/oder Wertdokumenten, bevorzugt Identifikationsdokumente, stand halten, ohne dabei am Werkzeug zu kleben oder zerstört bzw. in ihren Eigenschaften beeinträchtigt zu werden. Übliche Laminationsbedingungen solcher Sicherheits- und/oder Wertdokumente, bevorzugt I Identifikationsdokumente, sind beispielsweise Laminationstemperaturen von 100 bis 200°C, bevorzugt von 120 bis 190°C und Laminierdrücke von bis zu 380 N/cm², bevorzugt zwischen 200 und 350 N/cm² während der Laminierung. Vorzugsweise werden für die Laminierung Bleche eingesetzt, die eine Beschichtung, vorzugsweise eine Schmutz-abweisende Beschichtung, aufweisen. Die erfindungsgemäßen Schichtverbunde eine hohe Beständigkeit gegenüber Chemikalien und eine hohe Stabilität und Biegefestigkeit auch unter extremen Belastungen, wie beispielsweise Wärme auf. Außerdem ist die mögliche Aufbringung von Prägungen in die Außenschicht nicht durch Risse in der Oberfläche beeinträchtigt.

Mittels Lasergravur können weitere Daten und/oder Informationen, vorzugsweise personalisierte Daten und/oder Informationen auf dem erfindungsgemäßen Schichtverbund und/oder auf einer der thermoplastischen Kunststofffolien, des erfindungsgemäßen Schichtverbundes vor, während oder nach Schritt vi) aufgebracht werden.

Der erfindungsgemäße Schichtaufbau eignet sich bevorzugt für die Erhöhung der Fälschungssicherheit von Sicherheitsdokumenten, besonders bevorzugt Identifikationsdokumenten. Ganz besonders bevorzugt eignet sich der erfindungsgemäße Schichtaufbau für die Erhöhung der Fälschungssicherheit von solchen Identifikationsdokumenten in Form verklebter oder laminierter Schichtverbunde in Form von Kunststoffkarten, wie z.B. Personalausweisen, Reisepässen, Führerscheinen, Kreditkarten, Bankkarten, Karten für die Zugangskontrolle oder sonstigen Ausweisdokumenten etc.. Bevorzugte Identifikationsdokumente sind im Rahmen der vorliegenden Erfindung mehrschichtige flächenförmige Dokumente mit Sicherheitsmerkmalen wie Chips, Fotografien, biometrischen Daten etc. Diese Sicherheitsmerkmale können von außen sichtbar oder zumindest abfragbar sein. Vorzugsweise hat ein solches Identifikationsdokument eine Größe zwischen der einer Scheckkarte und der eines Reisepasses. Ein solches Identifikationsdokument kann auch Teil eines Dokumentes aus mehreren Teilen sein, wie z.B. ein Identifikationsdokument aus Kunststoff in einem Reisepass, der auch Papier- oder Pappanteile enthält.

Weiterhin Gegenstand der Erfindung ist die Verwendung einer Lackzusammensetzung enthaltend
a) Urethan(meth)acrylat, welches (Meth)acryloylgruppen und eine Isocyanat-Funktionalität von ≥ 1,75 bis ≤ 2,3, vorzugsweise von ≥ 1,85 bis ≤ 2,2, ganz besonders bevorzugt von ≥ 1,9 bis ≤ 2,1 aufweist,
b) acryliertes Acrylat, welches noch freie isocyanatreaktive Gruppen aufweist,
c) optional Additive und/oder Lösungsmittel
zur Beschichtung von thermoplastischen Kunststofffolien.

### Beispiele

Makrofol™ ID 6-2 - 750061: Thermoplastische Kunststofffolie basierend auf Polycarbonat in der Dicke 100 µm von Covestro Deutschland AG

Makrofol™ ID 4-4 - 010207: Weiße thermoplastische Kunststofffolie basierend auf Polycarbonat in der Dicke 450 µm von Covestro Deutschland AG

Makrofol™ ID 320: eine einseitig beschichtete Polycarbonatfolie der Dicke 105 µm von Covestro Deutschland AG

Makrofol™ID 1-4: Thermoplastische Kunststofffolie basierend auf Polycarbonat in der Dicke 100 µm von Covestro Deutschland AG. Oberfläche: hochglänzend (= 1)/fein mattiert (= 4).

Norilux™ DC-4: abriebbeständiger verformbarer Dual-Cure Lack der Firma Pröll KG, Deutschland

Norilux™ Hardener 036: Härter zur Vermischung mit Norilux™ DC-4 der Firma Pröll KG, Deutschland

### Herstellung des Isocyanatgruppen-haltigen Urethan(meth)acrylats

Die Herstellung des Isocyanatgruppen-haltigen Urethan(meth)acrylats erfolgte gemäß EP-A 1103572 "Isocyanatgruppen-haltiges Urethan(meth)acrylat B":
In eine Apparatur mit Rührer, Gaseinleitung und Thermometer werden unter Durchleiten von Luft (einfaches Kolbenvolumen pro Stunde) und Überleiten von Stickstoff (doppeltes Kolbenvolumen pro Stunde) 552 g Desmodur™ N 3600 (Handelsprodukt von Covestro Deutschland AG, Leverkusen; ein im wesentlichen HDI-Isocyanurate enthaltendes Polyisocyanat, NCO-Gehalt: 23,4 Gew.%, Viskosität 1200 mPa*s bei 23°C) vorgelegt. Dazu werden 1,6 g 2,6-Di-tert.-butyl-4-methyl-phenol gegeben. Unter Rühren wird die Lösung auf 60°C erwärmt. Die Heizquelle wird entfernt und es werden 116,0 g 2-Hydroxyethylacrylat so hinzugetropft, dass die Temperatur zwischen 55 und 65°C liegt. Anschließend wird bei 60°C weiter umgesetzt, bis der NCO-Gehalt unter 12,5 Gew.-% liegt. Das resultierende Produkt besitzt eine dynamische Viskosität von 12 Pa*s bei 23°C.

### Herstellung der Lackzusammensetzung des Beschichtungsmittels

### Komponente a)

20,9 kg des oben hergestellten Isocyanatgruppen-haltigen Urethan(meth)acrylats werden vorgelegt und mit 22,0 kg Diacetonalkohol vermischt.

### Komponente b)

18,5 kg Ebecryl™ 1200 (Allnex S.a.r.L )werden vorgelegt und mit 730 g Byk™ 306 (20%ig in 1-Methoxy-2-propanol), 870 g Dibutylzinndilaurat (1%ig in Butylacetat), 1,71 kg Irgacure™ 184 (50%-ig in 1-Methoxy-2-propanol) und 35,29 kg einer 1:1-Mischung von Diacetonalkohol und 1-Methoxy-2-propanol vermischt.

### Herstellung der erfindungsgemäß beschichteten Folie 1

Die Beschichtungslösung wird in einer Rolle zu Rolle Beschichtungsanlage mittels Schlitzgießer auf eine Folie, (Makrofol™ ID 1-4 der Dicke 75 µm) auf die raue Seite der Folie aufgetragen. Die Komponenten a) und b) des Beschichtungsmittels werden mittels eines statischen Mischers unmittelbar vor dem Eintritt in den Schlitzgießer miteinander vermischt. Die Geschwindigkeit der Folie betrug 0,7m/min.

Die Schichtdicke des Beschichtungsmittels betrug nass 25 - 30 µm und nach thermischer Härtung 10- 12 µm. Die thermische Härtung erfolgte bei 110°C für 10 min in einem Umlufttrockner.

Die so hergestellte Folie wies eine Dicke von 80 µm auf.

Die so hergestellte beschichtete Folie konnte klebefrei ohne Kaschierfolie aufgerollt werden, so dass diese eine hohe Blockfestigkeit aufwies.

### Herstellung einer beschichteten Folie 2 (Vergleich):

Es wurde eine beschichtete Folie 2 in Anlehnung an WO-A 2012/019583, Beispiel 4 wie folgt hergestellt:
Norilux™ DC-4 wurde mit dem Norilux™ Härter 036 im Verhältnis 10 : 1 gemischt und durch Rühren homogenisiert. Diese Lackmischung wurde im Siebdruckverfahren mit einem Sieb der Gewebestärke von 70 Fäden/inch unter Kunstlicht, welches keine UV-Strahlen enthält, auf eine 100 µm dicke Folie Makrofol™ID1-4 aufgebracht. Nach der Aufbringung der Lackschicht wurden die Lösungsmittel in einem Jet-Trockner bei einer Temperatur von 110 °C für etwa 10 Minuten verdampft.

Die resultierende beschichtete Folie wies eine hohe Blockfestigkeit auf.

### Herstellung einer beschichteten Folie 3 (Vergleich)

In einem 15L-Kessel wurde Degalan™ M920 (Copolymerisat auf Basis von PMMA, M_{w=}300.000; Fa. Evonik) in 1-Methoxy-2-propanol bei 100°C (Innentemperatur) wie folgt gelöst: 4500 g 1-Methoxy-2-propanol wurden vorgelegt und unter Rühren wurden 1100 g Degalan™ M920 eingetragen. Es wurde mit 2500 g 1-Methoxy-2-propanol nachgespült. Der Lösevorgang dauerte ca. 4 Stunden. Auf diese Weise wurde eine homogene, klare, farblose und zähflüssige Masse erhalten. Nach dem Lösevorgang wurde der Ansatz auf Raumtemperatur abgekühlt. 1100 g Dipentaerythritol penta/hexa-acrylat (DPHA Fa.Cytec) wurden separat mit 2500 g 1-Methoxy-2-propanol verdünnt. Bei Raumtemperatur wurde diese Lösung in die Apparatur gegeben und 2 Stunden untergemischt. 44,0 g Irgacure™ 1000 (IGM Resins BV), 22,0 g Darocure™ 4265 (IGM Resins BV) und 5,5 g BYK™333 (Fa.BYK) wurden separat mit 400 g 1-Methoxy-2-propanol verdünnt. Bei Erreichen einer Homogenität dieser Lösung wurde diese in die Apparatur gegeben und gut untergemischt. Der Ansatz wurde anschließend ca. 6 Stunden unter Lichtausschluss gerührt. Ausbeute: 11363 g. Das Beschichtungsmittel hatte einen Feststoffgehalt von 17% und eine Viskosität (23°C) bei 9000 mPas. Im Feststoffanteil des Beschichtungsmittels betrug der Anteil des Hochpolymers ebenso wie Anteil des Reaktivverdünners jeweils 48,4 Gew.-%.

Diese Beschichtung wurde auf eine 100 µm dicke Folie Makrofol™ID1-4 in einer Schichtdicke trocken von 10-12 µm aufgebracht.

### Herstellung einer beschichteten Folie 4 (Vergleich)

Die Beschichtung des Handelsprodukts Makrofol™ HF329 (eine extrudierte Polycarbonatfolie beidseitig hochglänzend, die auf einer Seite mit einer UV-härtbaren Lackierung versehen ist, erhältlich in der Standarddicke 280 µm) wurde auf eine 100 µm dicke Folie Makrofol™ID1-4 in einer Schichtdicke trocken von 10-12 µm aufgebracht.

### Herstellung eines Schichtverbundes in Form einer Karte

### Beispiel 1: Kartenherstellung mit der erfindungsgemäß beschichteten Folie 1

Es wurden DIN A4 Folien entsprechend Skizze 1 zusammengelegt. Skizze 1:

| | |
|---|---|
| ------------ | Folie 1 in einer Dicke von 80 µm mit der beschichteten Seite außen liegend |
| /////////////// | 100 µm Makrofol™ ID 6-2 - 750061 |
| *********** | 450 µm Makrofol™ ID4-4 - 010207 |
| /////////////// | 100 µm Makrofol™ ID6-2 - 750061 |
| ------------ | Folie 1 in einer Dicke von 80 µm mit der beschichteten Seite außen liegend |

Der Folienstapel gemäß Skizze 1 wurde zwischen zwei hochglanzpolierten 500 µm dicken Stahlblechen der Firma 4Plate GmbH (Wuppertal, Deutschland), gelegt. Bei diesen Stahlblechen handelt es sich um nachträglich behandelte Bleche, mit einer schmutz-abweisenden Beschichtung (Typ 4Slide). Die Bleche enthalten eine Gravur für die Prägung.

Dieser Aufbau wurde in einer beheizten Laminierpresse der Firma Bürckle (Model 50/100) gelegt und unter folgenden Laminationsbedingungen laminiert:
Temperatur der Heizpresse: 190°C
Spezifischer Flächendruck in der Heiz- Presse: 25 N/cm²
Verweilzeit in der Heizpresse: 8 Minuten
Einleiten der Kühlphase, spezifischer Flächendruck 150 N/cm²
Verweilzeit in der Kühlpresse bis 38°C erreicht wurden

Aus dem so erhaltenen Produkt wurden Karten entsprechend Scheckkartengröße (ID 1-Format nach ISO/IEC 7810) gestanzt.

Die Karte wurde von beiden Seiten mit einer UV- Lampe (Quecksilber Lampe des Herstellers Fusion UV-Systems) mit einer Dosis von 2,5 J/cm2 bestrahlt. Die Messung der UV- Energie erfolgte mittels Radiometer der Firma International Light Technologies, Model ILT490.

### Beispiel 2 (Vergleich):

Es wurde eine Karte wie unter Beispiel 1 beschrieben hergestellt. Jedoch wurde anstelle der Folie 1 Makrofol™ ID 320 verwendet. Die Karte wurde jedoch nicht einer UV-Härtung unterzogen, da die Folie Makrofol™ ID 320 bereits endgehärtet ist.

### Beispiel 3 (Vergleich):

Es wurde eine Karte wie unter Beispiel 1 beschrieben hergestellt. Jedoch wurde anstelle der Folie 1 die Folie 2 gemäß Skizze 2 verwendet, die sonstigen Bedingungen zur Herstellung der Karte entsprechen denen, wie unter Beispiel 1 beschrieben wurde:

**Skizze 2:**

| | |
|---|---|
| ------------ | 100 µm Folie 2 beschichteten Seite nach außen |
| /////////////// | 100 µm Makrofol™ ID6-2-750061 |
| *********** | 450 µm Makrofol™ ID4-4--010207 |
| /////////////// | 100 µm Makrofol™ ID6-2-750061 |
| ------------ | 100 µm Folie 2 mit der beschichteten Seite nach außen |

### Beispiel 4 (Vergleich):

Es wurde eine Karte wie unter Beispiel 1 beschrieben hergestellt. Jedoch wurde anstelle der Folie 1 die Folie 3 verwendet.

### Beispiel 5 (Vergleich):

Es wurde eine Karte wie unter Beispiel 1 beschrieben hergestellt. Jedoch wurde anstelle der Folie 1 die Folie 4 verwendet.

**Tabelle 1: Charakterisierung der Karten der Beispiele 1 bis 5:**

| **Eigenschaft** | **Bsp. 1** | **Bsp. 2(V)** | **Bsp. 3(V)** | **Bsp. 4(V)** | **Bsp. 5(V)** |
|---|---|---|---|---|---|
| Blockfestigkeit | 0 | 0 | 0 | 0 | 0 |
| Prägen von CLI/MLI | keine Risse | Risse | keine Risse | keine Risse | Risse |
| Planlage | 0 cm | Erst ab 100 µm Dicke < 1 cm | 0 cm | 0 cm | 0 cm |
| Lösemittelbeständigkeit | 0/0/0/1/2 | 0/0/0/0/0 | 1/4/3/5/5 | 0/0/0/0/1 | 0/0/0/0/0 |
| Biegetest | > 90.000 | > 90.000 | > 80.000 | 8.000 | 7.000 |
| Biegetest nach Klima | 30.000 | 5.000 | > 25.000 | 5.000 | 5.000 |

| | | | | | |
|---|---|---|---|---|---|
| Bsp.: Beispiel; (V): Vergleich | | | | | |

### Beschreibung der Bestimmung der in Tabelle 1 angegebenen Eigenschaften:

### Blockfestigkeit:

Zur Simulation der Blockfestigkeit von aufgerollten vorgetrockneten Lackfolien reichen klassische Prüfmethoden wie etwa in DIN 53150 beschrieben nicht aus, weshalb nachfolgende Prüfung vollzogen wurde. Die Lackmaterialien wurden mit einem handelsüblichen Rakel (Sollnassschichtdicke 100 µm) auf Makrofol™ DE 1-1 Folien (375 µm) aufgetragen. Nach einer Ablüftphase von 10 min bei 20 °C bis 25 °C wurden die lackierten Folien für 10 min bei 110 °C in einem Umluftofen getrocknet. Nach einer Abkühlphase von 1 min wurde eine handelsübliche Haftkaschierfolie GH-X173 natur (Firma Bischof und Klein, Lengerich, Deutschland) mit einer Kunststofffarbwalze auf eine Fläche von 100 mm x 100 mm faltenfrei auf der getrockneten Lackfolie aufgebracht. Anschließend wurde das kaschierte Folienstück flächig mit einem 10 kg Gewicht für 1 Stunde belastet. Danach wurde die Kaschierfolie entfernt und die Lackoberfläche visuell beurteilt.

Unter diesen Bedingungen sind alle in den Beispielen 1 bis 5 auf den beiden Außenseiten eingesetzten Folien blockfest, d.h. es bildet sich keine zusätzliche oder abweichende Struktur im Bereich der Belastung.

### CLI/MLI-Strukturen

Es handelt sich um Strukturen, die im Querschnitt ein Maß von ca. 80 x 80 µm² aufweisen, welche in die Stahlbleche, zwischen die der Folienstapel zur Herstellung der Karte in den Beispielen 1 bis 5 eingelegt wurde, eingraviert sind. Diese Strukturen müssen beim Laminieren der Karten in die Oberfläche der Karte übertragen werden, ohne dass Risse im Hardcoat entstehen. Die Bewertung erfolgte durch optische Mikroskopie.

### Planlage

Ein Blatt im Format A4 wurde mit der beschichteten Seite nach oben auf eine plane Unterlage gelegt. Es wurde gemessen, wie weit die Ecken oder Kanten sich von der Fläche abheben.

### Lösemittelbeständigkeit

Die Lösemittelbeständigkeit der Beschichtungen wurde mit Isopropanol, Xylol, 1-Methoxy-2-propylacetat, Ethylacetat, Aceton in technischer Qualität geprüft. Die Lösemittel wurden mit einem durchnässten Wattebausch auf die Beschichtung aufgetragen und durch Abdecken gegen Verdunstung geschützt. Es wurde, wenn nicht anders beschrieben, eine Einwirkzeit von 60 Minuten bei ca. 23 °C eingehalten. Nach dem Ende der Einwirkzeit wird der Wattebausch entfernt und die Prüffläche mit einem weichen Tuch sauber gewischt. Die Abmusterung erfolgt sofort visuell und nach leichtem Kratzen mit dem Fingernagel.

Folgende Stufen werden unterschieden:
- 0 = unverändert; keine Veränderung sichtbar; durch Kratzen nicht verletzbar.
- 1 = leichte Anquellung sichtbar, aber durch Kratzen nicht verletzbar.
- 2 = Veränderung deutlich sichtbar, durch Kratzen kaum verletzbar.
- 3 = merklich verändert nach festem Fingernageldruck oberflächlich zerstört.
- 4 = stark verändert nach festem Fingernageldruck bis zum Untergrund durchgekratzt.
- 5 = zerstört; schon beim Abwischen der Chemikalie wird der Lack zerstört; die Testsubstanz ist nicht entfernbar (eingefressen).

Die Werte für die 5 Lösemittel werden als Bewertung einfach in der o.g. Reihenfolge der Lösemittel hintereinander geschrieben. Werte von 0 und 1 gelten im Allgemeinen als Bestehen des Tests.

### Biegetest

Der Biegetest wurde gemäß ISO 10373-1 durchgeführt.

Ein erster Biegetest erfolgte nach Herstellung der Karte und ein weiterer Biegetest ("Biegetest nach Klima" der Tabelle 1) erfolgte nach Lagerung der Karte in einer Klimakammer für 168 h, bei einer Temperatur von 85 °C, um die Biegefähigkeit der Karte auch bei extremer Belastung zu beurteilen.

### Zusammenfassung der Ergebnisse

Das Kriterium der Blockfestigkeit wurde von allen in den Beispielen 1 bis 5 eingesetzten äußeren Folien erfüllt.

Beim Prägen von CLI/MLI-Strukturen zeigen sich Unterschiede: Beispiel 2 und Beispiel 5 zeichnen sich zwar durch eine besondere mechanische und chemische Beständigkeit aus, zeigen aber nach der Lamination Risse im Bereich der Prägestrukturen. Bezüglich der Planlage ist Beispiel 2 ungeeignet. Die Lösemittelbeständigkeit ist bei Beispiel 3 nicht zufrieden stellend.

Im Biegetest erweisen sich nur die Beispiele 1, 2, und 3 als ausreichend flexibel. Beispiele 4 und 5 bestehen die übliche Anforderung von > 80.000 Biegungen bereits vor Klimalagerung nicht. Die Materialien ermüden zu schnell und reißen schon nach < 10.000 Biegungen. Beispiel 2, 4 und 5 werden offenbar in der Klimalagerung spröder und bestehen nach Klimalagerung den Biegetest nicht mehr. Nur die beiden Systeme 1 und 3 sind in der Lage den Biegetest vor und nach Klimalagerung in der geforderten Weise zu bestehen.

In der Summe der diskutierten Eigenschaften (Prägbarkeit, Lösemittelbeständigkeit und Biegetest mit und ohne Klimalagerung) zeigt sich, dass die Verwendung der Folie 1 als äußere Schicht in einem Schichtverbund (Beispiels 1) gegenüber den anderen gewählten Beispielen sehr vorteilhaft für die Verwendung als Schutzfolie in Sicherheitsdokumenten ist.

## Patentansprüche

1. Folie umfassend eine thermoplastische Kunststofffolie und eine Beschichtung, wobei die Beschichtung hergestellt wurde aus einer Lackzusammensetzung enthaltend
a) Urethan(meth)acrylat, welches (Meth)acryloylgruppen und eine Isocyanat-Funktionalität von ≥ 1,75 bis ≤ 2,3, vorzugsweise von ≥ 1,85 bis ≤ 2,2, ganz besonders bevorzugt von ≥ 1,9 bis ≤ 2,1 aufweist,
b) acryliertes Acrylat, welches noch freie isocyanatreaktive Gruppen aufweist,
c) optional Additive und/oder Lösungsmittel.

2. Folie gemäß Anspruch 1, wobei die Komponente a) und b) im Äquivalentverhältnis von 0,5 : 1,0 bis 1,1 : 1,0, vorzugsweise von 0,6 : 1 bis 1,0 : 1,0 besonders bevorzugt von 0,7 : 1 bis 0,95 : 1 eingesetzt werden.

3. Folie gemäß Anspruch 1 oder 2, wobei das Urethan(meth)acrylat erhältlich ist durch Reaktion
a-1) eines (Meth)acryloylgruppen aufweisenden einwertigen Alkohols und
a-2) Polyisocyanaten mit einer Isocyanat-Funktionalität im Bereich von ≥ 2,5 und ≤ 6,0, vorzugsweise von ≥ 2,7 und ≤ 4,5, besonders bevorzugt von ≥ 2,8 und ≤ 3,5.

4. Folie gemäß einem der Ansprüche 1 bis 3, wobei das acrylierte Acrylat Hydroxylgruppen als isocyanatreaktive Gruppen aufweist.

5. Folie gemäß einem der Ansprüche 1 bis 4, wobei das acrylierte Acrylat eine Viskosität in Lösung im Bereich von 2600 und 3400 mPa*s bei 23°C, vorzugsweise von 2800 bis 3200 mPa*s bei 23°C aufweist.

6. Folie gemäß Anspruch 1 bis 5, wobei die Folie einer thermischen Härtung bei einer Temperatur von ≥ 50 °C, vorzugsweise ≥ 80 °C bis ≤ 130 °C, besonders bevorzugt ≥ 100 °C bis ≤ 120 °C unterzogen wird.

7. Ein Folie gemäß Anspruch 1 bis 6, wobei die thermoplastische Kunststofffolie ein oder mehrere Polycarbonate oder Copolycarbonate auf Basis von Diphenolen, Poly- oder Copoly(meth)acrylate, Poly- oder Copolykondensate der Terephthalsäure oder deren Blends umfasst.

8. Folie gemäß Anspruch 1 bis 7, wobei die Beschichtung nach thermischer Härtung eine Dicke im Bereich von ≥ 2 bis ≤ 20 µm, vorzugsweise von ≥ 3 bis ≤ 15 µm, besonders bevorzugt von ≥ 5 bis ≤ 11 µm aufweist.

9. Verfahren zur Herstellung einer Folie gemäß Anspruch 1 bis 8, umfassend die Schritte
i) Bereitstellung einer thermoplastischen Kunststofffolie,
ii) Beschichtung der thermoplastischen Kunststofffolie mit einer Lackzusammensetzung enthaltend
a) Urethan(meth)acrylat, welches (Meth)acryloylgruppen und eine Isocyanat-Funktionalität von ≥ 1,75 bis ≤ 2,2, vorzugsweise von ≥ 1,85 bis ≤ 2,3, ganz besonders bevorzugt von ≥ 1,9 bis ≤ 2,1 aufweist,
b) acryliertes Acrylat, welches noch freie isocyanatreaktive Gruppen aufweist,
c) optional Additive und/oder Lösungsmittel,
iii) thermische Härtung der beschichteten Folie.

10. Verfahren gemäß Anspruch 9, umfassend weiterhin die Schritte
iv) Herstellung eines Schichtaufbaus, vorzugsweise ein Sicherheits-und/oder Wertdokument, besonders bevorzugt Identifikationsdokument, enthaltend mehrere thermoplastische Kunststofffolien, wobei der Schichtaufbau, vorzugsweise Sicherheits- und/oder Wertdokument, besonders bevorzugt Identifikationsdokument, wenigstens eine Folie gemäß Anspruch 1 bis 8 enthält und wobei die beschichtete Seite der Folie gemäß Anspruch 1 bis 8 nach außen gerichtet ist,
v) gegebenenfalls Aufbringung einer Prägung, vorzugsweise eine Prägung im Mikrometermaßstab, auf wenigstens einer Außenseite des Schichtaufbaus während oder nach Schritt iv),
vi) Endhärtung Schichtaufbaus, vorzugsweise Sicherheits- und/oder Wertdokuments, besonders bevorzugt Identifikationsdokuments, mittels aktinischer Strahlung, vorzugsweise mittels UV-Strahlung.

11. Verfahren gemäß Anspruch 10, wobei in Schritt iv) der Schichtaufbau, vorzugsweise das Sicherheits-und/oder Wertdokument, besonders bevorzugt das Identifikationsdokument, durch Lamination, vorzugsweise durch Lamination mit beschichteten Laminierblechen, herstellt wird.

12. Verfahren gemäß Anspruch 10 oder 11, wobei in Schritt iv) der Schichtaufbau, vorzugsweise das Sicherheits-und/oder Wertdokument, besonders bevorzugt das Identifikationsdokument, wenigstens zwei Folien gemäß Anspruch 1 bis 8 enthält und wobei die beschichtete Seite der Folie gemäß Anspruch 1 bis 8 jeweils nach außen gerichtet ist.

13. Verfahren gemäß Anspruch 10 bis 12, wobei vor, während oder nach Schritt vi) weitere Informationen mittels Lasergravur aufgebracht werden.

14. Schichtaufbau enthaltend wenigstens eine Folie gemäß Anspruch 1 bis 8, wobei die beschichtete Seite der Folie gemäß Anspruch 1 bis 8 nach außen gerichtet ist,

15. Verwendung eine Lackzusammensetzung enthaltend
a) Urethan(meth)acrylat, welches (Meth)acryloylgruppen und eine Isocyanat-Funktionalität von ≥ 1,75 bis ≤ 2,3, vorzugsweise von ≥ 1,85 bis ≤ 2,2, ganz besonders bevorzugt von ≥ 1,9 bis ≤ 2,1 aufweist,
b) acryliertes Acrylat, welches noch freie isocyanatreaktive Gruppen aufweist,
c) optional Additive und/oder Lösungsmittel zur Beschichtung von thermoplastischen Kunststofffolien.

## Claims

1. Foil comprising a thermoplastic foil and a coating, wherein the coating has been produced from a coating material composition containing
a) urethane (meth)acrylate which has (meth)acryloyl groups and an isocyanate functionality of ≥ 1.75 to ≤ 2.3, preferably of ≥ 1.85 to ≤ 2.2, very particularly preferably of ≥ 1.9 to ≤ 2.1,
b) acrylated acrylate which still has free isocyanate-reactive groups,
c) optionally additives and/or solvents.

2. Foil according to Claim 1, wherein the components a) and b) are used in a ratio of equivalents of 0.5:1.0 to 1.1:1.0, preferably of 0.6:1 to 1.0:1.0, particularly preferably of 0.7:1 to 0.95:1.

3. Foil according to Claim 1 or 2, wherein the urethane (meth)acrylate is obtainable by reaction of
a-1) a monohydric alcohol having (meth)acryloyl groups and
a-2) polyisocyanates having an isocyanate functionality in the range from ≥ 2.5 to ≤ 6.0, preferably from ≥ 2.7 to ≤ 4.5, particularly preferably from ≥ 2.8 to ≤ 3.5.

4. Foil according to any of Claims 1 to 3, wherein the acrylated acrylate has hydroxyl groups as isocyanate-reactive groups.

5. Foil according to any of Claims 1 to 4, wherein the acrylated acrylate has a viscosity in solution in the range from 2600 to 3400 mPa*s at 23°C, preferably from 2800 to 3200 mPa*s at 23°C.

6. Foil according to Claim 1 to 5, wherein the foil is subjected to thermal curing at a temperature of ≥ 50°C, preferably ≥ 80°C to ≤ 130°C, particularly preferably ≥ 100°C to ≤ 120°C.

7. Foil according to Claim 1 to 6, wherein the thermoplastic foil comprises one or more polycarbonates or copolycarbonates based on diphenols, poly- or copoly(meth)acrylates, poly- or copolycondensates of terephthalic acid or blends thereof.

8. Foil according to Claim 1 to 7, wherein the coating, after thermal curing, has a thickness in the range of ≥ 2 to ≤ 20 µm, preferably of ≥ 3 to ≤ 15 µm, particularly preferably of ≥ 5 to ≤ 11 µm.

9. Method for producing a foil according to Claim 1 to 8, comprising the steps of:
i) providing a thermoplastic foil,
ii) coating the thermoplastic foil with a coating material composition containing
a) urethane (meth)acrylate which has (meth)acryloyl groups and an isocyanate functionality of ≥ 1.75 to ≤ 2.2, preferably of ≥ 1.85 to ≤ 2.3, very particularly preferably of ≥ 1.9 to ≤ 2.1,
b) acrylated acrylate which still has free isocyanate-reactive groups,
c) optionally additives and/or solvents,
iii) thermally curing the coated foil.

10. Method according to Claim 9, further comprising the steps of:
iv) producing a layer construction, preferably a security document and/or valuable document, particularly preferably identification document, comprising a plurality of thermoplastic foils, wherein the layer construction, preferably security document and/or valuable document, particularly preferably identification document, comprises at least one foil according to Claim 1 to 8 and wherein the coated side of the foil according to Claim 1 to 8 is directed toward the outside,
v) optionally applying embossing, preferably embossing on the micrometer scale, to at least one outer side of the layer construction during or after step iv),
vi) effecting final curing of the layer construction, preferably security document and/or valuable document, particularly preferably identification document, by means of actinic radiation, preferably by means of UV radiation.

11. Method according to Claim 10, wherein in step iv) the layer construction, preferably the security document and/or valuable document, particularly preferably the identification document, is produced by lamination, preferably by lamination using coated lamination plates.

12. Method according to Claim 10 or 11, wherein in step iv) the layer construction, preferably the security document and/or valuable document, particularly preferably the identification document, comprises at least two foils according to Claim 1 to 8 and wherein the coated side of the foil according to Claim 1 to 8 is in each case directed toward the outside.

13. Method according to Claim 10 to 12, wherein prior to, during or after step vi) further information is applied by means of laser engraving.

14. Layer construction comprising at least one foil according to Claim 1 to 8, wherein the coated side of the foil according to Claim 1 to 8 is directed toward the outside.

15. Use of a coating material composition containing
a) urethane (meth)acrylate which has (meth)acryloyl groups and an isocyanate functionality of ≥ 1.75 to ≤ 2.3, preferably of ≥ 1.85 to ≤ 2.2, very particularly preferably of ≥ 1.9 to ≤ 2.1,
b) acrylated acrylate which still has free isocyanate-reactive groups,
c) optionally additives and/or solvents, for the coating of thermoplastic foils.

## Revendications

1. Feuille comprenant une feuille de plastique thermoplastique et un revêtement, le revêtement ayant été préparé à partir d'une composition de laque contenant
a) un (méth)acrylate d'uréthane, qui présente des groupes (méth)acryloyle et une fonctionnalité d'isocyanate de ≥ 1,75 à ≤ 2,3, de préférence de ≥ 1,85 à ≤ 2,2, tout particulièrement préférablement de ≥ 1,9 à ≤ 2,1,
b) un acrylate acrylé, qui présente des groupes encore libres réactifs envers isocyanate,
c) éventuellement des additifs et/ou des solvants.

2. Feuille selon la revendication 1, les composants a) et b) étant utilisés en un rapport d'équivalents de 0,5 : 1,0 à 1,1 : 1,0, de préférence de 0,6 : 1 à 1,0 : 1,0, particulièrement préférablement de 0,7 : 1 à 0,95 : 1.

3. Feuille selon la revendication 1 ou 2, le (méth)acrylate d'uréthane pouvant être obtenu par réaction
a-1) d'un alcool monovalent présentant des groupes (méth)acryloyle et
a-2) de polyisocyanates dotés d'une fonctionnalité d'isocyanate dans la plage de ≥ 2,5 et ≤ 6,0, de préférence de ≥ 2,7 et ≤ 4,5, particulièrement préférablement de ≥ 2,8 et ≤ 3,5.

4. Feuille selon l'une quelconque des revendications 1 à 3, l'acrylate acrylé présentant des groupes hydroxyle en tant que groupes réactifs envers isocyanate.

5. Feuille selon l'une quelconque des revendications 1 à 4, l'acrylate acrylé présentant une viscosité en solution dans la plage de 2 600 à 3 400 mPa*s à 23 °C, de préférence de 2 800 à 3 200 mPa*s à 23 °C.

6. Feuille selon les revendications 1 à 5, la feuille étant soumise à un durcissement thermique à une température de ≥ 50 °C, de préférence ≥ 80 °C à ≤ 130 °C, particulièrement préférablement ≥ 100 °C à ≤ 120 °C.

7. Feuille selon les revendications 1 à 6, la feuille de plastique thermoplastique comprenant un ou plusieurs polycarbonates ou copolycarbonates à base de diphénols, poly(méth)acrylates ou copoly(méth)acrylates, polycondensats ou copolycondensats de l'acide téréphtalique ou leurs mélanges.

8. Feuille selon les revendications 1 à 7, le revêtement présentant après durcissement thermique une épaisseur dans la plage de ≥ 2 à ≤ 20 µm, de préférence de ≥ 3 à ≤ 15 µm, particulièrement préférablement de ≥ 5 à ≤ 11 µm.

9. Procédé pour la préparation d'une feuille selon les revendications 1 à 8, comprenant les étapes de
i) mise à disposition d'une feuille de plastique thermoplastique,
ii) revêtement de la feuille de plastique thermoplastique avec une composition de laque contenant
a) un (méth)acrylate d'uréthane, qui présente des groupes (méth)acryloyle et une fonctionnalité d'isocyanate de ≥ 1,75 à ≤ 2,2, de préférence de ≥ 1,85 à ≤ 2,3, tout particulièrement préférablement de ≥ 1,9 à ≤ 2, 1,
b) un acrylate acrylé, qui présente des groupes encore libres réactifs envers isocyanate,
c) éventuellement des additifs et/ou des solvants,
iii) durcissement thermique de la feuille revêtue.

10. Procédé selon la revendication 9, comprenant en outre les étapes de
iv) préparation d'une structure stratifiée, de préférence un document de sécurité et/ou de valeur, particulièrement préférablement un document d'identification, contenant plusieurs feuilles de plastique thermoplastiques, la structure stratifiée, de préférence le document de sécurité et/ou de valeur, particulièrement préférablement le document d'identification, contenant au moins une feuille selon les revendications 1 à 8 et le côté revêtu de la feuille selon les revendications 1 à 8 étant orienté vers l'extérieur,
v) éventuellement application d'une inscription, de préférence une inscription à l'échelle micrométrique, sur au moins un côté externe de la structure stratifiée pendant ou après l'étape iv),
vi) durcissement final de la structure stratifiée, de préférence du document de sécurité et/ou de valeur, particulièrement préférablement du document d'identification, au moyen d'un rayonnement actinique, de préférence au moyen d'un rayonnement UV.

11. Procédé selon la revendication 10, dans lequel, dans l'étape iv), la structure stratifiée, de préférence le document de sécurité et/ou de valeur, particulièrement préférablement le document d'identification, est préparée par stratification, de préférence par stratification avec des tôles de stratification revêtues.

12. Procédé selon la revendication 10 ou 11, dans lequel dans l'étape iv), la structure stratifiée, de préférence le document de sécurité et/ou de valeur, particulièrement préférablement le document d'identification, contient au moins deux feuilles selon les revendications 1 à 8 et le côté revêtu de la feuille selon les revendications 1 à 8 étant orienté à chaque fois vers l'extérieur.

13. Procédé selon les revendications 10 à 12, dans lequel avant, pendant ou après l'étape vi) d'autres informations sont appliquées au moyen d'une gravure laser.

14. Structure stratifiée contenant au moins une feuille selon les revendications 1 à 8, le côté revêtu de la feuille selon les revendications 1 à 8 étant orienté vers l'extérieur.

15. Utilisation d'une composition de laque contenant
a) un (méth)acrylate d'uréthane, qui présente des groupes (méth)acryloyle et une fonctionnalité d'isocyanate de ≥ 1,75 à ≤ 2,3, de préférence de ≥ 1,85 à ≤ 2,2, tout particulièrement préférablement de ≥ 1,9 à ≤ 2,1,
b) un acrylate acrylé, qui présente des groupes encore libres réactifs envers isocyanate,
c) éventuellement des additifs et/ou des solvants pour le revêtement de feuilles de plastique thermoplastiques.
